# EUROPEAN PATENT SPECIFICATION

(11) **EP 4 419 983 B1**
(45) Date of publication and mention of the grant of the patent: **01.10.2025**
(21) Application number: 22800301.8
(22) Date of filing: 18.10.2022
(51) Int. Cl.: G06F 1/18, G06F 1/20

(54) **AN ELECTRONIC ASSEMBLY**
ELEKTRONISCHE ANORDNUNG
ENSEMBLE ÉLECTRONIQUE

(30) Priority: 20.10.2021 WO PCT/CN2021/125063; 22.11.2021 EP 21209453
(43) Date of publication of application: 28.08.2024
(73) Proprietor: Signify Holding B.V., 5656 AE Eindhoven (NL)
(72) Inventor: TIAN, Feng, 5656 AE Eindhoven (NL); PAN, Feng, 5656 AE Eindhoven (NL)
(74) Representative: Verweij, Petronella Daniëlle
(86) International application number: PCT/EP2022/078945
(87) International publication number: WO 2023/066919

(56) References cited:
- EP-A2- 3 614 040
- DE-U1- 202014 104 475
- US-A- 6 094 349
- US-A1- 2020 100 386

## Description

### FIELD OF THE INVENTION

This invention relates to electronic assemblies, and in particular electronic assemblies which include a component which needs to be thermally coupled to a surface to enable effective cooling.

### BACKGROUND OF THE INVENTION

Many electronic devices include components which require heat to be dissipated away, which heat arises during operation of the component. This heat dissipation is needed in order to prevent thermal damage to that component or indeed to other components in the vicinity.

Many electronic components generate undesired heat. For example, power transistors generate a significant amount of heat that may need to be removed from the area where the power transistors are located.

For example, the internal drivers of many lamps generate a lot of heat when they are working, and this heat needs to be dissipated through the housing in which the driver is located.

A typical housing design for a lamp driver comprises an upper cover which closes a driver cavity. During assembly, the lamp driver is placed in the driver cavity and the cover is closed to seal the driver cavity. In some examples, an upper surface of the driver is provided with a thermally conductive pad attached to the driver via a thermally conductive paste. The cover is pressed on the thermally conductive pad to provide a thermal coupling to the driver. The cover then conducts heat away from the driver to the outside or to heat dissipation fins, to enable heat dissipation.

This structure has some disadvantages. The greater the power of the lamp, the more drivers are needed, and the larger the (combined) area of the thermal pad that is required. In this way, the cover needs to compress a large area of the thermal pad. As a result, a larger force is required to press the cover down to close it over a base of the housing and to fasten the cover in its closed position. This is an inconvenient process step during the production of the lamps. The cover is for example closed manually, and a significant amount of effort may be needed to press the down the cover to complete the assembly, This increases the cost of the man-hours used in production. It also means subsequent maintenance is more difficult, and the maintenance cost is high.

There is therefore a need for an improved assembly design which enables good thermal coupling of an internal component to its housing, while reducing difficulties in assembling the housing, in particular closing a cover of the housing against a thermal coupling part of the internal component.

US 6094349A1 discloses an electrical device has a printed-circuit board secured to a cover of the electrical-device housing, as well as a heat-dissipation mat arranged on a housing wall.

DE 202014104475U1 discloses a device for transferring heat, with two solid heat-conducting bodies which are arranged vertically one above the other at a variable distance, a spring-elastic element by which the two heat-conducting bodies are pressed apart.

US 2020100386A1 discloses a module in a hardened optical platform includes one or more Printed Circuit Boards (PCB) and associated components; at least one cage configured to receive a pluggable optical module.

EP 3614040A2 discloses a light source plate structure of a ceiling light, comprising a fixed top cover and a light source plate detachably mounted to the fixed top cover.

### SUMMARY OF THE INVENTION

The invention is defined by the claims.

According to examples in accordance with an aspect of the invention, there is provided an electronic assembly, comprising:
a housing having a base and a cover, the cover being openable and closeable and having an internal surface;
an electronic component mounted in the housing;
a carrier on which the electronic component is mounted, the carrier comprising a first edge and an opposite second edge, wherein the first edge is pivotably mounted relative to the base of the housing;
a thermal coupling component on top of the electronic component for making contact with the internal surface of the cover for dissipating heat from the electronic component;
an adjustment handle on the outside of the housing; and
an actuator being configured to be moved by the adjustment handle, wherein the actuator engages with the carrier, thereby to adjust a position of the second edge of the carrier thereby to move the thermal coupling component towards the internal surface of the cover.

This assembly has an actuator to adjust a position of the carrier (e.g. printed circuit board) of an electronic component, so that a thermal coupling to a housing cover can be ensured. In this way, the cover can be closed easily, since closing the cover does not require tight compression between the cover and the thermal coupling component. In particular, the cover is subjected to very little force during closing. Only after closing, the thermal coupling is improved by operating the adjustment handle, which tilts the carrier towards the internal surface of the cover.

A movement of the adjustment handle preferably creates a smaller amount of movement of the actuator.

The adjustment handle thus provides a mechanical advantage. The thermal coupling component may also move less than the actuator, so that a high force is applied to the thermal coupling component from a small force needed to operate the adjustment handle.

The adjustment handle for example comprises a rotary adjustment knob and the actuator comprises a cam. A rotary adjustment is simple and intuitive for a user. Of course, in other examples, a slider or other type of actuator may be used.

The adjustment handle is for example movable between:
a first position in which the cover can be opened and closed, and
a second position in which the cover is locked to the base.

Thus, the same handle, e.g. rotary knob, is used to lock the cover closed as well as moving the carrier to implement a good thermal coupling between the cover and the electronic component.

The second position of the adjustment handle for example makes the carrier parallel to the base and at its highest position. The thermal conduction component (e.g. pad) is compressed and is tightly pressed against the cover. Thus, a locking of the cover closed simultaneously implements compression of the thermal conduction component and pressure against the internal surface of the cover.

The adjustment handle for example comprises a first part attached to the cover and a second part attached to the base. The two parts engage when the cover is closed, and this means the adjustment handle may also lock the cover to the base, as mentioned above.

In the first position of the adjustment handle, the first and second parts for example engage with each other by closing the cover, and the second edge of the carrier is in a position furthest from the internal surface of the cover.

In the second position of the adjustment handle, the second edge of the carrier is in a position closest to the internal surface of the cover.

Thus, when the cover is closed, the carrier is away from the cover so that little force is needed to close the cover. Only after the cover is closed is the carrier moved by operating the adjustment handle to create an enhanced thermal coupling.

The first part for example comprises an outer manually operated rotary handle part attached to the cover and the second part comprises a crankshaft which is engaged by the rotary handle part when the cover is closed, wherein rotation of the rotary handle part rotates the engaged crankshaft and rotation of the crankshaft rotates the actuator.

The handle part for example comprises a pillar which engages with a channel in the crankshaft when the cover is closed. Thus, the handle part and the crankshaft engage when the cover is closed, so that rotation of the handle part turns the crankshaft to adjust the height of the carrier.

The length of the crankshaft (from the rotation axis to the pillar) is for example at least three times the length of the actuator (from the rotation axis).

The length of the actuator is for example a cam height. This mechanical advantage makes it easy to rotate the handle part and deliver a large force to compress the thermal coupling component by means of the actuator.

A center of the thermal coupling component is for example at a first distance from the first edge, and the length of the carrier between the first and second edges of the carrier is at least 1.5 times the first distance.

This provides a further mechanical advantage (i.e. increase in force) in that a larger force and smaller movement is applied to the thermal coupling component, compared to the force and movement of the actuator.

The first edge of the carrier for example comprises an arcuate shaft which can rotate with respect to a guide formed by the base of the housing. Thus, the carrier pivots about this shaft when the adjustment is implemented by the adjustment handle.

The electronic component is for example a lighting driver and the housing comprises a driver compartment.

The invention also provides a luminaire comprising:
the assembly defined above having a lighting driver as the electronic component; and
a light source driven by the lighting driver.

The luminaire for example is a streetlight.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Figure 1 shows in schematic form the concept of the invention as applied to a generic electronic assembly;
Figures 2 and 3 each show a luminaire incorporating the adjustment concept of Figure 1, in exploded form from different viewpoints;
Figure 4 shows a cross section through the driver housing part of the luminaire;
Figure 5 shows an enlarged view of the adjustment handle of Figure 4;
Figure 6 shows the adjustment handle in more detail from above;
Figure 7 shows the adjustment handle in more detail from below;
Figure 8 shows the crankshaft in more detail;
Figure 9 shows the first edge of the carrier more clearly;
Figure 10 shows the luminaire with the cover closed but the handle part not yet rotated;
Figure 11 shows an enlarged area of the adjustment handle of Figure 10 with a cross section through the rotation axis;
Figure 12 shows the luminaire with the cover closed and the handle part rotated to the locked position; and
Figure 13 shows an enlarged area of the adjustment handle of Figure 12 with a cross section in front of the rotation axis.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides an electronic assembly comprising a housing having a base and a cover and electronic component mounted in the housing on a carrier. The carrier is pivotable about a first edge within the housing. An adjustment handle moves the carrier at a second, opposite, edge thereby to bring the electronic component into thermal contact with an internal surface of the cover after the cover is closed (e.g. during locking of the cover), for dissipating heat from the electronic component.

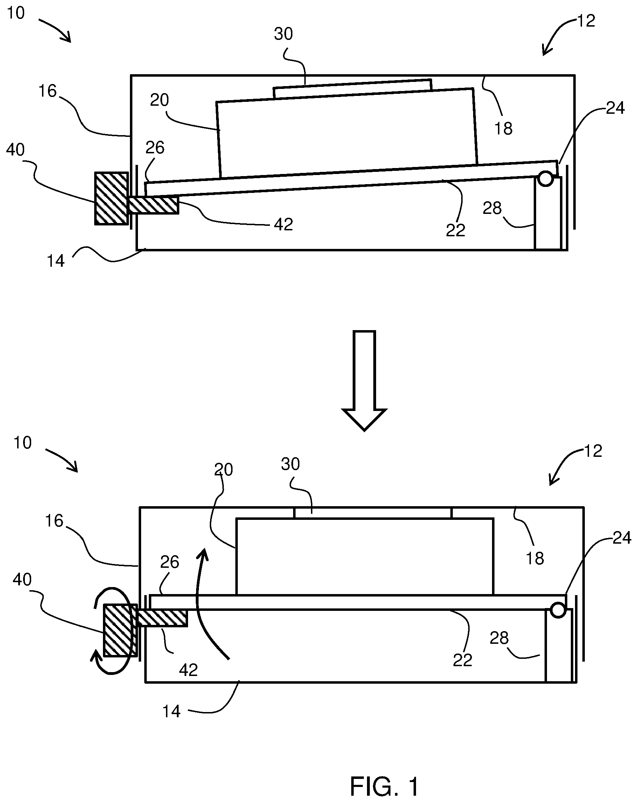

Figure 1 shows in schematic form the concept of the invention as applied to a generic electronic assembly 10.

The electronic assembly 10 comprises a housing 12 having a base 14 and a cover 16, the cover 16 being openable and closeable and having an internal surface 18.

An electronic component 20 is positioned in the housing and is inserted when the cover is opened. The component 20 is mounted on a carrier 22 such as a steel plate. The carrier comprises a first edge 24 and an opposite second edge 26. The first edge 24 is pivotably mounted relative to the base 14 of the housing. For example, the first edge 24 sits on a support 28 and it can rotate about that support.

A thermal coupling component 30, such as a thermal pad, is attached on top of the component 20 for example by a thermal paste. The thermal pad 30 is for making contact with the internal surface 18 of the cover for dissipating heat from the electronic component 20.

In the top image of Figure 1, the cover 16 is closed over the base 14, but the thermal pad 30 does not yet contact the inner surface. It may already contact the inner surface, for example near the first edge 24, but the full compression force to be applied to the thermal pad has not yet been provided. The thermal pad may even make full contact with the internal surface 18 as soon as the cover is closed, but again the full desired compression force has not yet been applied to the thermal pad.

The invention is based on the use of an adjustment handle 40 on the outside of the housing for increasing the thermal coupling between the thermal pad and the internal surface after closing the cover, for example as part of the procedure for locking the cover in its closed position.

An actuator 42 is moved by the adjustment handle 40, and the actuator engages with the carrier 22, thereby to adjust a position of the second edge 26 of the carrier so as to move the thermal coupling component 30 towards the internal surface 18 of the cover.

The adjusted position of the carrier is shown in the bottom image.

The adjustment handle is for example movable between a first position (the top image of Figure 1) in which the cover can be opened and closed, and a second position (the bottom image in Figure 1) in which the cover is locked to the base.

Thus, the same handle is used to lock the cover closed as well as moving the carrier to implement a good thermal coupling between the cover and the electronic component.

The bottom image of Figure 1 shows that the second position of the adjustment handle makes the carrier 22 parallel to the base 14 and at its highest position. The thermal pad 30 is compressed and is tightly pressed against the cover to provide desired thermal coupling between the component and the cover, so that heat can be dissipated to the ambient surroundings around the cover.

The cover can be closed easily, since closing the cover does not require tight engagement between the cover 16 and the thermal pad 30. In particular, the cover is subjected to very little force during closing. When the cover is closed, a gasket is for example clamped between the cover 16 and the base 14 to create a sealed enclosure for the component 20. The locking of the cover closed using the adjustment handle provides a small pressure between the base and the cover, to compress the gasket for water-proofing purposes.

The operation of the adjustment handle also improves the thermal coupling, by tilting the carrier about the first edge and towards the internal surface of the cover.

The adjustment handle 40 in the example shown comprises a rotary adjustment knob, and the rotation is translated to an upward movement of the carrier. This translation for example is achieved using a cam. The cam for example has a smaller radius than the radius of the knob (about a common rotation axis), so that a movement of the adjustment handle (i.e. the length of a rotation arc) is translated to a smaller linear of movement of the carrier caused by the cam.

The adjustment handle 40 thus provides a mechanical advantage so that the knob is easy to turn despite the large force that is desired between the thermal pad and the inside of the cover.

The concept of the invention may be applied to any electronic assembly. One example will now be presented in more detail, relating to an application of the invention to a luminaire.

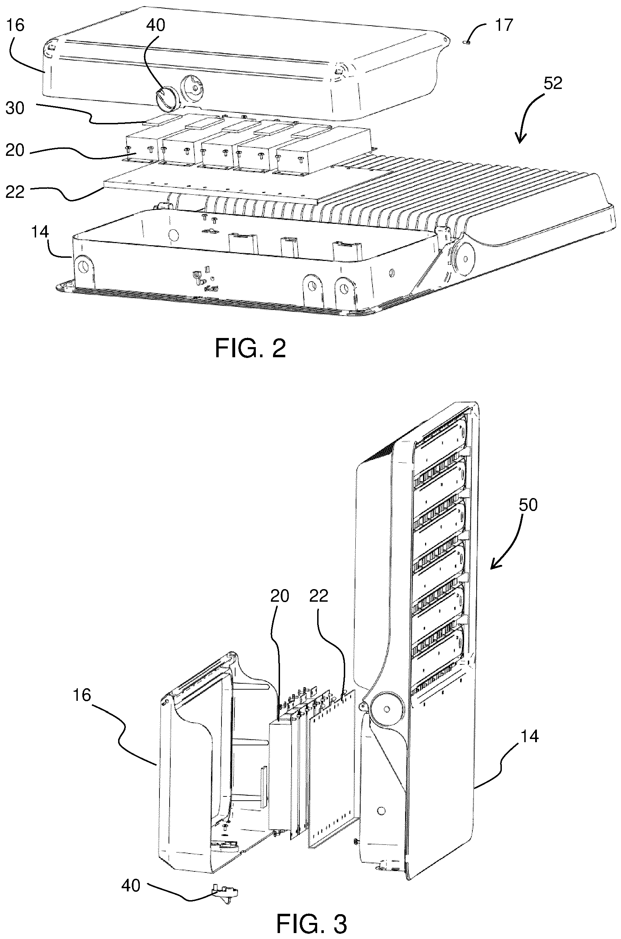

Figures 2 and 3 each show a luminaire incorporating the adjustment concept as explained above, in exploded form from different viewpoints.

The luminaire is for example a road lighting luminaire.

Figures 2 and 3 show the housing base 14 and cover 16, and a set of four lighting driver circuits 20 mounted on a carrier 22 in the form of a steel plate. Each driver circuit comprises a printed circuit board on which electronic components are mounted. Each driver circuit 20 has a thermal pad 30 for thermal coupling to the cover 16 as explained above. The carrier provides the required support strength to enable the thermal pad 30 to be pressed against the cover.

The base 14 of the housing also defines a support structure for the light source of the luminaire, namely an LED arrangement 50. A heat sink 52 in the form of a set of fins is provided over the LED arrangement 50. The cover 16 of the housing functions as a heat sink for the driver circuits 20.

The cover 16 pivots open around hinge pins 17 at the back of the top of the cover, above the first edge 24 of the carrier. This enables insertion of the driver circuits into a driver cavity formed by the housing.

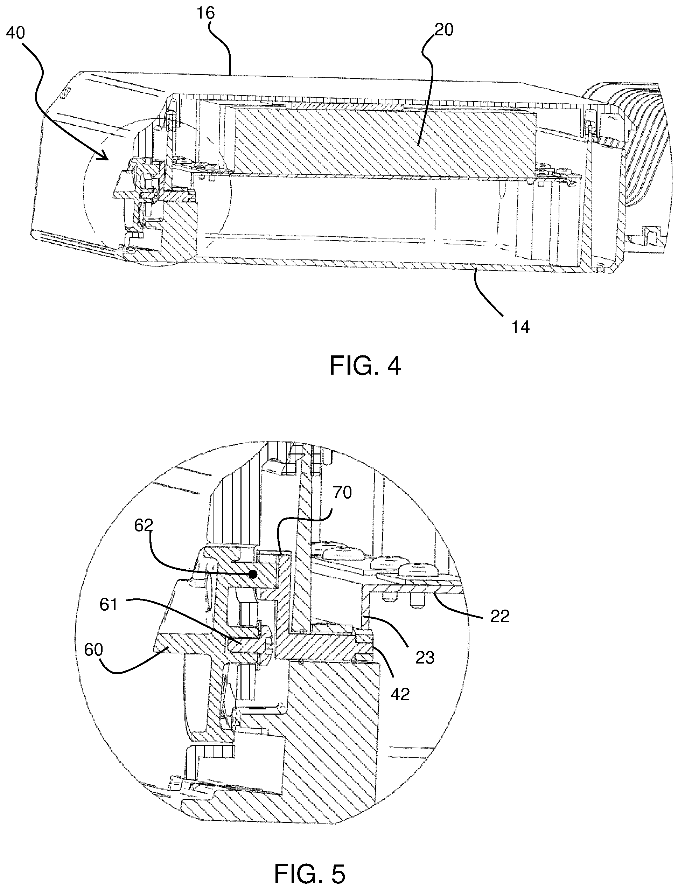

Figure 4 shows a cross section through the driver cavity part of the luminaire housing and Figure 5 shows an enlarged view of the adjustment handle. In Figures 4 and 5 the cover is closed but the thermal pad is not yet compressed.

The adjustment handle 40 comprises a first part 60 attached to the cover (by screw 61 about which it can rotate) and a second part 70 attached to the base. The first part 60 is an outer manually operated rotary handle part and the second part 70 is a crankshaft engaged by the rotary handle part when the cover 16 is closed. The handle part 60 has a pillar 62 which slots into a channel in the crankshaft 70 so that the handle part and the crankshaft are coupled together such that rotation of the handle part rotates the crankshaft about a common rotation axis.

Thus, when the rotary handle part 60 is in the position for closing or unlocking the cover, the angular position of the handle part is such that the pillar is received in the channel of the crankshaft when the cover is closed (or removed from the channel of the crankshaft when the cover is opened). Rotation of the rotary handle part rotates the engaged crankshaft, and rotation of the crankshaft rotates the actuator 42.

The actuator 42 is a cam which pushes up on the underside of the carrier 22, such as pushing up against a rib 23 which forms part of the carrier (for example a folded over edge of the carrier).

Rotation of the handle part not only lifts the carrier by means of the cam, but also locks the cover to the base.

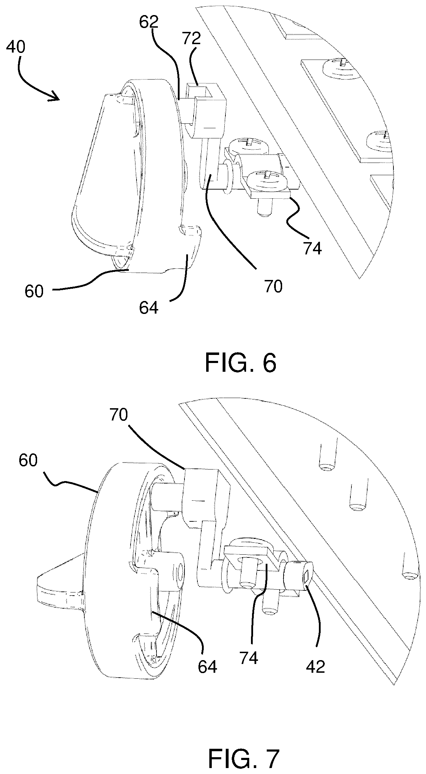

Figure 6 shows the adjustment handle in more detail from above and Figure 7 shows the adjustment handle in more detail from below. The crankshaft 70 is fixed with respect to the base by a pressing plate 74. The crankshaft can rotate within a channel formed by the pressing plate 74.

The handle part is shown in the unlocked orientation. The pillar 62 is at the top so that when the cover is closed, it slides vertically down into the channel 72 of the crankshaft 70. In this first position of the handle part, the cam 42 allows the carrier 22 to drop to its lowest position so that the second edge of the carrier 22 is in a position furthest from the internal surface of the cover.

Rotation of the adjustment handle to the second position pushes up the second edge of the carrier to a position closest to the internal surface of the cover.

Thus, when the cover is closed, the carrier is away from the cover so that little force is needed to close the cover. Only after the cover is closed is the carrier moved by operating the adjustment handle to create an enhanced thermal coupling and this also locks the cover.

The handle part 60 has a tab 64 which locks the cover to the base after the handle part 60 has been rotated. For example, the handle part is rotated clockwise so that the tab 64 is located at the bottom of the handle part, and it engages over a corresponding tab of the base to lock the cover closed over the base.

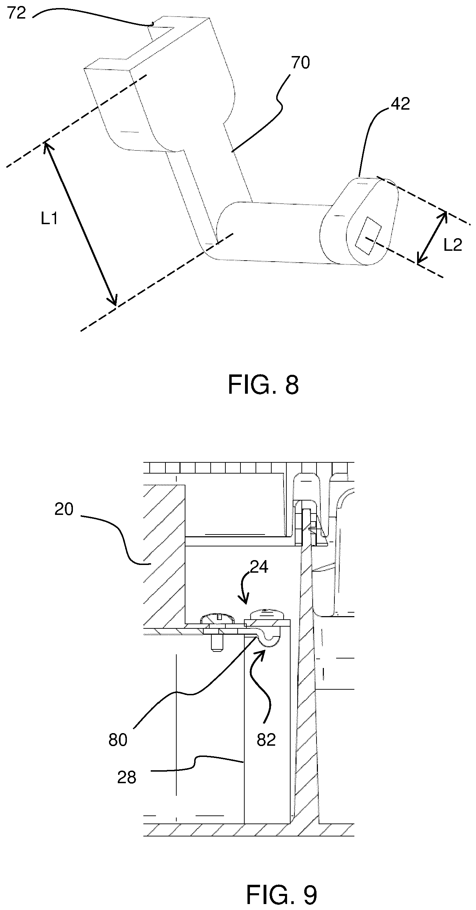

Figure 8 shows the crankshaft 70 in more detail. The crankshaft 70 has a length L1 (from the position of the pillar received in the channel 72 to the rotation axis) and the cam 42 has a length L2 (from the rotation axis to the tip of the cam).

The length L1 of the crankshaft rotation axis to the pillar is for example at least three times the length L2 of the actuator to the rotation axis. This gives a mechanical advantage that makes it easy to rotate the handle part and deliver a large force to compress the thermal coupling component.

The mechanical advantage is the ratio of the arc length in rotating the knob (over the range of angular adjustment of the knob) to the change in carrier position implemented by the cam. The carrier height adjustment by the cam is for example around 2mm, and the arc length of the rotary knob movement may be around 1.5cm (e.g. a 45 degree rotation with a radius of 2cm) hence giving a mechanical advantage in this example of around 7.5. The mechanical advantage is for example in the range 5 to 20.

This makes it easy to apply a large compression force to the thermal pad. It also means it is easy to open the cover by rotating the handle part back to the first position in which the cover can be opened.

Figure 9 shows the first edge 24 of the carrier 22 more clearly. The first edge of the carrier comprises an arcuate shaft 80 which can rotate with respect to a guide 82 formed by the support 28 extending up from the base of the housing. In this design, the carrier simply rests on the support 28. However, other pivotable connections may be formed between the first edge of the carrier and the base of the housing.

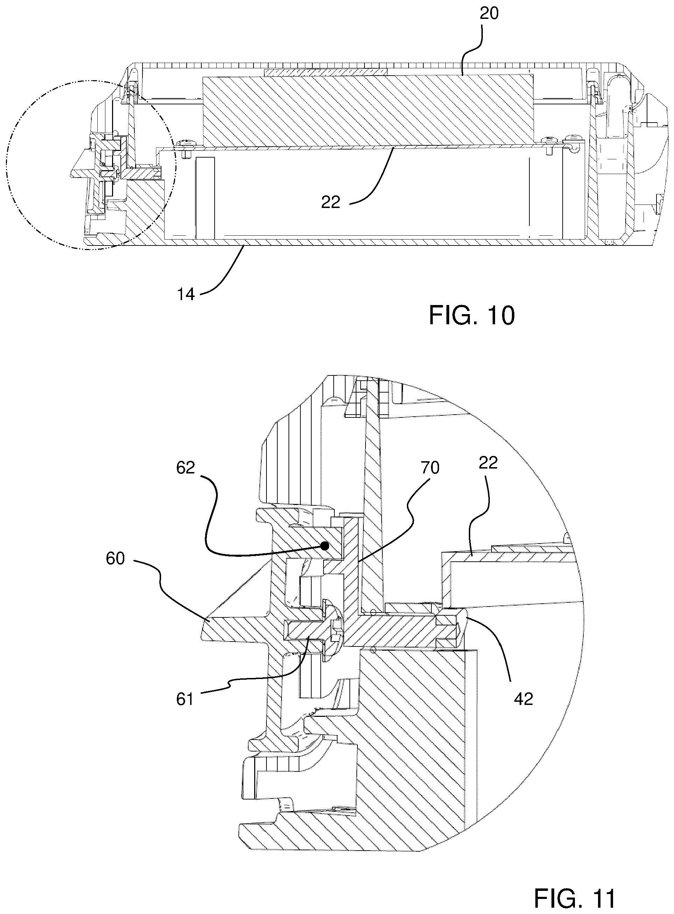

Figure 10 shows the driver cavity part of the luminaire with the cover closed but the handle part not yet rotated. The carrier 22 is at a small angle to the base (i.e. a small angle to the horizontal if the base is parallel to the horizontal).

Figure 11 shows an enlarged area of the adjustment handle 40 with a cross section through the rotation axis. The cam 42 is positioned so that the carrier is at the lowest position at its second edge.

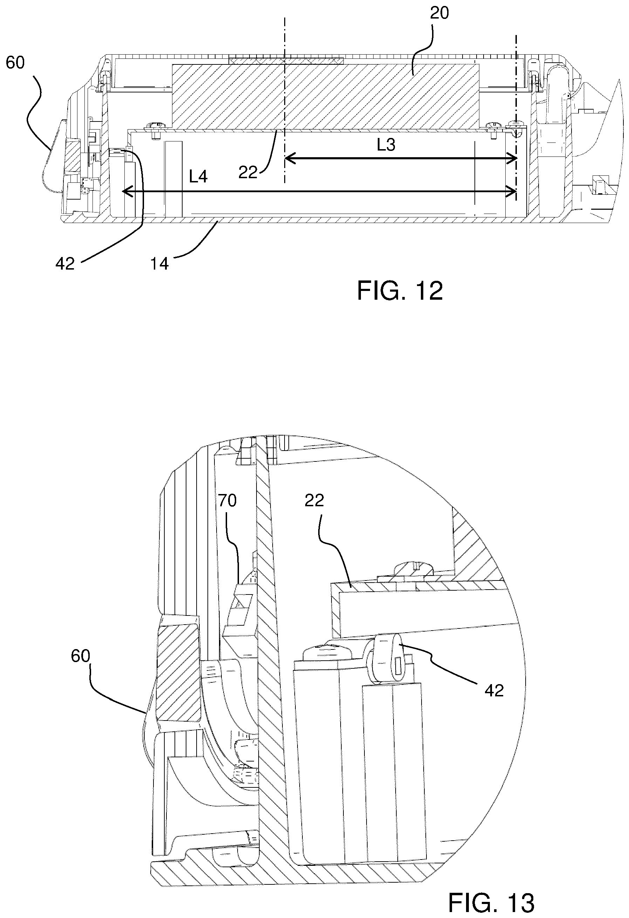

Figure 12 shows the driver cavity part of the luminaire with the cover closed and the handle part rotated to the locked position. The carrier 22 is now parallel to the base because the second edge of the carrier has been lifted up by the cam 42.

Figure 13 shows an enlarged area of the adjustment handle 40 with a cross section in front of the rotation axis so the cam can be seen in perspective view. The cam 42 is positioned so the carrier is at the highest position at its second edge because the cam 42 is standing upright to lift the carrier.

A center of the thermal pad 30 is for example at a first distance L3 from the first edge, and the length L4 of the carrier between the first and second edges of the carrier is at least 1.5 times the first distance.

This provides a further mechanical advantage in that a larger force and smaller movement is applied to the thermal pad, compared to the force and movement of the carrier at the second edge caused by the cam. A lifting by the cam of a first distance results in a smaller average lifting of the thermal pad, so that the overall mechanical advantage is increased to around 11 ( 7.5 x 1.5) in this particular example.

The example above is based on a rotary knob. However a slider or any other adjustment handle may be used to lift the free edge of the carrier, to lift it from an orientation which is tilted with respect to the desired thermal coupling orientation to a non-titled orientation.

The adjustment handle has two parts in the example above; one attached to the cover and one attached to the base. The adjustment handle may instead be only on the base, and it engages with the cover itself (rather than a portion of the handle attached to the cover) when the cover is closed.

The invention may be applied to any electronic assembly, and the luminaire shown in detail is by way of example only.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

The mere fact that certain measures are recited in mutually different dependent claims does not indicate that a combination of these measures cannot be used to advantage.

If the term "adapted to" is used in the claims or description, it is noted the term "adapted to" is intended to be equivalent to the term "configured to".

Any reference signs in the claims should not be construed as limiting the scope.

## Claims

1. An electronic assembly (10), comprising:
a housing having a base (14) and a cover (16), the cover (16) having an internal surface (18);
an electronic component (20) mounted in the housing;
a carrier (22) on which the electronic component (20) is mounted, the carrier comprising a first edge (24) and an opposite second edge (26), wherein the first edge (24) is pivotably mounted relative to the base (14) of the housing;
**characterized in that**
the cover (16) being openable and closeable;
further **characterized in that** the electronic assembly (10) further comprises:
a thermal coupling component (30) on top of the electronic component (20) for making contact with the internal surface (18) of the cover (16) for dissipating heat from the electronic component (20);
an adjustment handle (40) on the outside of the housing; and
an actuator (42) being configured to be moved by the adjustment handle (40), wherein the actuator (42) engages with the carrier (22), thereby to adjust a position of the second edge (26) of the carrier thereby to move the thermal coupling component (30) towards the internal surface (18) of the cover.

2. The assembly of claim 1, wherein a movement of the adjustment handle (40) creates a smaller amount of movement of the actuator (42).

3. The assembly of claim 1 or 2, wherein the adjustment handle (40) comprises a rotary adjustment knob and the actuator comprises a cam (42).

4. The assembly of any one of claims 1 to 3, wherein the adjustment handle (40) is movable between:
a first position in which the cover (16) can be opened and closed, and
a second position in which the cover (16) is locked to the base (14).

5. The assembly of claim 4, wherein the adjustment handle comprises a first part (60) attached to the cover and a second part (70) attached to the base.

6. The assembly of claim 5, wherein:
in the first position of the adjustment handle, the first and second parts (60,70) engage with each other by closing the cover (16), and the second edge (26) of the carrier is in a position furthest from the internal surface (18) of the cover; and
in the second position of the adjustment handle (40), the second edge (26) of the carrier is in a position closest to the internal surface (18) of the cover.

7. The assembly of claim 5 or 6, wherein the first part comprises an outer manually operated rotary handle part (60) attached to the cover (16) and the second part comprises a crankshaft (70) engaged by the rotary handle part (60) when the cover is closed, wherein rotation of the rotary handle part (60) rotates the engaged crankshaft (70) and rotation of the crankshaft (70) rotates the actuator (42).

8. The assembly of claim 7, wherein the handle part comprises a pillar (62) which engages with a channel (72) in the crankshaft (70) when the cover is closed.

9. The assembly of claim 7 or 8, wherein the length (L1) from the crankshaft rotation axis to the pillar (51) is at least three times the length (L2) from the actuator (42) to the rotation axis.

10. The assembly of any one of claims 1 to 9, wherein a center of the thermal coupling component (30) is at a first distance (L3) from the first edge, and the length (L4) of the carrier (22) between the first and second edges of the carrier is at least 1.5 times the first distance (L3).

11. The assembly of any one of claims 1 to 10, wherein the first edge (24) of the carrier comprises an arcuate shaft (80) which can rotate with respect to a guide (82) formed by the base (14) of the housing.

12. The assembly of any one of claims 1 to 11, wherein the electronic component (20) is a lighting driver and the housing comprises a driver compartment.

13. A luminaire comprising:
the assembly of claim 12; and
a light source (50) driven by the lighting driver.

14. The luminaire of claim 13 comprising a streetlight.

## Patentansprüche

1. Elektronische Baugruppe (10), umfassend:
ein Gehäuse, das eine Basis (14) und eine Abdeckung (16) aufweist, wobei die Abdeckung (16) eine Innenoberfläche (18) aufweist;
eine in dem Gehäuse montierte elektronische Komponente (20);
einen Träger (22), auf dem die elektronische Komponente (20) montiert ist, wobei der Träger eine erste Kante (24) und eine gegenüberliegende zweite Kante (26) umfasst, wobei die erste Kante (24) relativ zu der Basis (14) des Gehäuses schwenkbar montiert ist;
**dadurch gekennzeichnet, dass**
die Abdeckung (16) geöffnet und geschlossen werden kann;
ferner **dadurch gekennzeichnet, dass** die elektronische Baugruppe (10) ferner umfasst:
eine thermische Kopplungskomponente (30) auf der Oberseite der elektronischen Komponente (20) zum Herstellen eines Kontakts mit der Innenoberfläche (18) der Abdeckung (16) zum Ableiten von Wärme von der elektronischen Komponente (20);
einen Einstellgriff (40) an der Außenseite des Gehäuses; und
einen Aktuator (42), der konfiguriert ist, um durch den Einstellgriff (40) bewegt zu werden, wobei der Aktuator (42) mit dem Träger (22) in Eingriff kommt, um dadurch eine Position der zweiten Kante (26) des Trägers einzustellen und dadurch die thermische Kopplungskomponente (30) in Richtung der Innenoberfläche (18) der Abdeckung zu bewegen.

2. Baugruppe nach Anspruch 1, wobei eine Bewegung des Einstellgriffs (40) eine geringere Bewegung des Aktuators (42) bewirkt.

3. Baugruppe nach Anspruch 1 oder 2, wobei der Einstellgriff (40) einen Dreheinstellknopf umfasst und der Aktuator eine Nocke (42) umfasst.

4. Baugruppe nach einem der Ansprüche 1 bis 3, wobei der Einstellgriff (40) bewegt werden kann zwischen:
einer ersten Position, in der die Abdeckung (16) geöffnet und geschlossen werden kann, und
einer zweiten Position, in der die Abdeckung (16) mit der Basis (14) verriegelt ist.

5. Baugruppe nach Anspruch 4, wobei der Einstellgriff einen ersten Teil (60), der an der Abdeckung befestigt ist, und einen zweiten Teil (70) umfasst, der an der Basis befestigt ist.

6. Baugruppe nach Anspruch 5, wobei:
in der ersten Position des Einstellgriffs der erste und der zweite Teil (60, 70) durch Schließen der Abdeckung (16) miteinander in Eingriff kommen und die zweite Kante (26) des Trägers in einer Position ist, die am weitesten von der Innenoberfläche (18) der Abdeckung entfernt ist; und
in der zweiten Position des Einstellgriffs (40) die zweite Kante (26) des Trägers in einer Position ist, die der Innenoberfläche (18) der Abdeckung am nächsten ist.

7. Baugruppe nach Anspruch 5 oder 6, wobei der erste Teil einen äußeren, manuell betriebenen Drehgriffteil (60) umfasst, der an der Abdeckung (16) befestigt ist, und der zweite Teil eine Kurbelwelle (70) umfasst, in die der Drehgriffteil (60) eingreift, wenn die Abdeckung geschlossen wird, wobei eine Drehung des Drehgriffteils (60) die in Eingriff stehende Kurbelwelle (70) dreht und eine Drehung der Kurbelwelle (70) den Aktuator (42) dreht.

8. Baugruppe nach Anspruch 7, wobei der Griffteil eine Säule (62) umfasst, die mit einer Rinne (72) in der Kurbelwelle (70) in Eingriff kommt, wenn die Abdeckung geschlossen wird.

9. Baugruppe nach Anspruch 7 oder 8, wobei die Länge (L1) von der Kurbelwellendrehachse bis zu der Säule (51) mindestens das Dreifache der Länge (L2) von dem Aktuator (42) bis zu der Drehachse beträgt.

10. Baugruppe nach einem der Ansprüche 1 bis 9, wobei sich ein Mittelpunkt der thermischen Kopplungskomponente (30) in einem ersten Abstand (L3) von der ersten Kante befindet und die Länge (L4) des Trägers (22) zwischen der ersten und der zweiten Kante des Trägers mindestens das 1,5-fache des ersten Abstands (L3) beträgt.

11. Baugruppe nach einem der Ansprüche 1 bis 10, wobei die erste Kante (24) des Trägers eine gekrümmte Welle (80) umfasst, die sich in Bezug auf eine Führung (82) drehen kann, die durch die Basis (14) des Gehäuses gebildet wird.

12. Baugruppe nach einem der Ansprüche 1 bis 11, wobei die elektronische Komponente (20) ein Beleuchtungstreiber ist und das Gehäuse ein Treiberfach umfasst.

13. Leuchte, umfassend:
die Baugruppe nach Anspruch 12; und
eine Lichtquelle (50), die von dem Beleuchtungstreiber angesteuert wird.

14. Leuchte nach Anspruch 13, umfassend eine Straßenlaterne.

## Revendications

1. Ensemble électronique (10), comprenant :
un logement ayant une base (14) et un couvercle (16), le couvercle (16) ayant une surface interne (18) ;
un composant électronique (20) monté dans le logement ;
un support (22) sur lequel le composant électronique (20) est monté, le support comprenant un premier bord (24) et un second bord (26) opposé, dans lequel le premier bord (24) est monté à pivotement par rapport à la base (14) du logement ;
**caractérisé en ce que**
le couvercle (16) peut être ouvert et fermé ;
**caractérisé en outre en ce que** l'ensemble électronique (10) comprend en outre :
un composant de couplage thermique (30) au-dessus du composant électronique (20) permettant de faire un contact avec la surface interne (18) du couvercle (16) pour dissiper la chaleur en provenance du composant électronique (20) ;
une poignée d'ajustement (40) sur l'extérieur du logement ; et
un actionneur (42) étant conçu pour être déplacé par la poignée d'ajustement (40), dans lequel l'actionneur (42) vient en prise avec le support (22), pour ajuster de ce fait une position du second bord (26) du support pour déplacer de ce fait le composant de couplage thermique (30) en direction de la surface interne (18) du couvercle.

2. Ensemble selon la revendication 1, dans lequel un déplacement de la poignée d'ajustement (40) crée une plus petite quantité de déplacement de l'actionneur (42).

3. Ensemble selon la revendication 1 ou 2, dans lequel la poignée d'ajustement (40) comprend une molette d'ajustement rotative et l'actionneur comprend une came (42).

4. Ensemble selon l'une quelconque des revendications 1 à 3, dans lequel la poignée d'ajustement (40) peut être déplacée entre :
une première position dans laquelle le couvercle (16) peut être ouvert et fermé, et
une seconde position dans laquelle le couvercle (16) est verrouillé à la base (14).

5. Ensemble selon la revendication 4, dans lequel la poignée d'ajustement comprend une première partie (60) fixée au couvercle et une seconde partie (70) fixée à la base.

6. Ensemble selon la revendication 5, dans lequel :
dans la première position de la poignée d'ajustement, les première et seconde parties (60, 70) viennent en prise l'une avec l'autre en fermant le couvercle (16), et le second bord (26) du support est dans une position la plus éloignée de la surface interne (18) du couvercle ; et
dans la seconde position de la poignée d'ajustement (40), le second bord (26) du support est dans une position la plus proche de la surface interne (18) du couvercle.

7. Ensemble selon la revendication 5 ou 6, dans lequel la première partie comprend une partie de poignée rotative (60) externe à commande manuelle, fixée au couvercle (16) et la seconde partie comprend une manivelle (70) en prise par la partie de poignée rotative (60) lorsque le couvercle est fermé, dans lequel une rotation de la partie de poignée rotative (60) met en rotation la manivelle (70) en prise et une rotation de la manivelle (70) met en rotation l'actionneur (42).

8. Ensemble selon la revendication 7, dans lequel la partie de poignée comprend une colonne (62) qui vient en prise avec un canal (72) dans la manivelle (70) lorsque le couvercle est fermé.

9. Ensemble selon la revendication 7 ou 8, dans lequel la longueur (L1) allant de l'axe de rotation de manivelle à la colonne (51) vaut au moins trois fois la longueur (L2) allant de l'actionneur (42) à l'axe de rotation.

10. Ensemble selon l'une quelconque des revendications 1 à 9, dans lequel un centre du composant de couplage thermique (30) est à une première distance (L3) du premier bord, et la longueur (L4) du support (22) entre les premier et second bords du support vaut au moins 1,5 fois la première distance (L3).

11. Ensemble selon l'une quelconque des revendications 1 à 10, dans lequel le premier bord (24) du support comprend une tige arquée (80) qui peut effectuer une rotation par rapport à un guide (82) formé par la base (14) du logement.

12. Ensemble selon l'une quelconque des revendications 1 à 11, dans lequel le composant électronique (20) est un circuit de pilotage d'éclairage et le logement comprend un compartiment de circuit de pilotage.

13. Luminaire comprenant :
l'ensemble selon la revendication 12 ; et
une source de lumière (50) pilotée par le circuit de pilotage d'éclairage.

14. Luminaire selon la revendication 13 comprenant un lampadaire.
